# EUROPEAN PATENT APPLICATION

(11) **EP 1 239 015 A1**
(43) Date of publication of application: **11.09.2002**
(21) Application number: 01105349.3
(22) Date of filing: 08.03.2001
(51) Int. Cl.: C09J 4/06, C09J 175/16, C08F 290/06

(54) **Easy to manufacture meth (acrylic) adhesive compositions**

(71) Applicant: Sika AG, vorm. Kaspar Winkler & Co., CH-8048 Zürich (CH)
(72) Inventor: De Cooman, Ria, Dr., 6331 Hünenberg (CH); Meyer, Werner R., Dr., 8702 Zollikon (CH)
(74) Representative: Blum, Rudolf Emil Ernst

(57) **Abstract**

Described are adhesive compositions comprising
(i) at least one reactive monomer (A) selected from ethylenically unsaturated carboxylic acid derivatives and mixtures of such derivatives; said one or more derivatives preferably being one or more esters,
(ii) at least one liquid elastomer in a molar weight range of 1000 - 9000 which is functionalized with ethylenically unsaturated groups (B),
(iii) at least one impact modifier (C), and
(iv) at least one free radical initiator and at least one catalyst, whereby optionally either said initiator ,or said catalyst is present separately, in a further component or paste, respectively,
whereby the amounts of A, B, and C preferably are as follows, namely
B referred to the total amount of A+B = 15 - 60 % by weight, and
C referred to the total amount of A+B+C = 5 - 30 % by weight.

## Description

The present invention relates to easy to manufacture adhesive compositions based on meth(acrylic) systems comprising a liquid elastomer and an impact modifier.

Methacrylic adhesives combine a number of advantageous properties that make them the ideal solution for many bonding applications. Compared to adhesives based on other chemistries like polyurethanes or epoxies they allow for a relatively long open time with a subsequent fast build-up of strength. Two component methacrylic adhesives reach handling strength within minutes after mixing, and over 80% of the final strength is usually reached within less than an hour. Furthermore, they usually show an excellent adhesion on a wide range of substrates from metals to plastics, like ABS, polyesters, etc. often without pre-treatment. One major requirement an adhesive system needs to fullfil is the durability of the bond. In many applications the long-term performance is significantly increased by the flexibility and the impact resistance of the adhesive. While the two-component meth(acrylic) adhesives of the first generation, formulated with methyl methacrylate, inert fillers e.g. calcium carbonate, catalysts and peroxide initiators show brittle behavior, many efforts have been made in the past to improve flexibility and impact resistance of these systems.

One of said efforts to improve flexibility and impact resistance led to the addition of solid non-reactive elastomers that are dissolved in the meth(acrylic) monomers. Such compositions are called rubber-toughened adhesive compositions. The elastomers are solids at room temperature, and commercially available as large particles or granulates.

This approach is described in several patent documents, such as: US 3,890,407, US 4,106,971, US 4,263,419, US 3,725,504, US 4,200,480, US 3,994,764, EP 0 641 846. The disadvantage of such formulations is that they can only be mixed homogeneously after extremely long dissolving times, or with special equipment like extruders or kneaders due to the high viscosity of the polymer. Moreover, this type of compositions suffers from the limitation that the monomer, or the monomer mixture, must be chosen such that the non-reactive thermoplastic polymer is soluble therein. Practically, methyl methacrylate is the only monomer with high dissolving properties, and thus the only monomer that allows a polymer-in-monomer composition with up to 30% polymer content. Such low molar mass monomers, like methyl methacrylate, have a strong odor and are highly flammable. Polymer-in-monomer compositions resulting from this approach have a rubbery, stringy consistency and a high viscosity that makes their handling difficult. Due to the high viscosity of the mixture, only a limited amount of fillers can be used making the formulation expensive. A high viscosity is also limiting the adhesion of the formulation, as it limits the wetting of the substrate. Finally, the impact resistance, especially at low temperatures, is low.

Further known are adhesives with multi phase morphology (with core-shell polymers). It is known that composites with a dispersed rubbery phase with a low glass transition temperature have a superior impact resistance. The multi phase morphology can be obtained with core-shell polymers. Core-shell polymers consist of cross-linked acrylic based or butadiene based elastomeric core phase polymers which are grafted onto an outermost rigid thermoplastic polymer. Such core-shell polymers are primarily used as impact modifiers in certain polymer systems like PVC. Because of the cross-linked core such polymers do not dissolve but only swell in the monomers. Such core-shell polymers are e.g. described in US 3,985,703 and US 6,985,704, and adhesive composition with multi phase morphology using core-shell polymers are described in EP 0 087 304.

This approach, however suffers from the limitations that, although these compositions have a high impact-resistance, their elongation at break is low.

Another known approach is the addition of liquid, low- molar mass elastomers that mix easily with the monomers to form homogeneous liquids. A number of patent documents describe such approach to increase the flexibility of the systems, namely US 4,769,419; US 4,331,765; EP 0,561,352 disclosing mixtures of monomer and liquid rubber.

DE 2,610,423; US 4,439,600; EP 0,640,672; DE 2,319,637; US 4,223,115 disclose mixtures of monomer and acrylic functionalised polyurethane. In US 4,223,115 the formulation optionally contains a dissolved solid elastomer, e.g. NBR (nitrile-butadiene-rubber), polychloroprene.

The limitation of this approach is that all these compositions lack impact resistance, especially at low temperatures.

Also already known are combinations of solid elastomers, core-shell polymers and monomers. Combinations of solid elastomers and core-shell polymers and monomers are described in US 4,942,201 and US 5,206,288. The dissolved elastomer provides the adhesive with flexibility and the dispersed core-shell graft co-polymer insures a high impact resistance also at low temperatures. The ratios of the three components found in the state of the art are
monomers: solid elastomers: core-shell polymers = A:B:C
B in A+B = 5% - 20% or 10% - 35%, and - in another document -
C in A+B+C = 10% - 30%.

Such compositions show the same limitations as solids in monomers with the exception that they provide improved impact resistance over solid elastomers alone.

All these systems of the state of the art have limited properties with regard to flexibility and/or impact resistance, or they are difficult to manufacture.

The goal of the present invention therefore was to provide adhesive compositions with good flexibility and impact resistance that are furthermore easy to manufacture.

It has now surprisingly been found that adhesive compositions with very good flexibility and impact resistance are obtained if they comprise
(i) at least one reactive monomer (A) selected from ethylenically unsaturated carboxylic acid derivatives and mixtures of such derivatives, said one or more derivatives preferably being one or more esters,
(ii) at least one liquid elastomer in a molar weight range of 1000 - 9000 which is functionalized with ethylenically unsaturated groups (B),
(iii) at least one impact modifier (C), and
(iv) at least one free radical initiator and at least one catalyst, whereby optionally either said initiator, or said catalyst is present separately, in a further component or paste, respectively.

Optionally the composition can further comprise at least one adhesion promotor like (meth)acrylic acids, (meth)acrylic phosphate esters, silanes such as 3-mercaptopropyltrimethoxysilane, (3-methacryloyloxypropyl)trimethoxysilane and 3-glycidyloxypropyltrimethoxysilane or the respective triethoxysilanes, or mixtures of said silanes, and/or Zn di(meth)acrylates.

In a much preferred embodiment, the adhesive composition of the present invention comprises the components A, B, and C in the following amounts:
B based on the total weight of A+ B in an amount of 15 - 60 % by weight, preferably 15 - 40 % by weight, and

C based on the total weight of A+B+C in an amount of 5 to 30 % by weight, preferably 10 to 25 % by weight.

The reactive monomers (A), preferably are esters. Preferred esters are (meth)acrylic esters, in particular linear or branched or cyclic C₁-C₆-alkyl esters or heterocyclic or aromatic esters. Much preferred esters are methylmethacrylate (MMA), tetrahydrofurfurylmethacrylate (THFMA), cyclohexylmethacrylate (CHMA), and cyclic trimethylolpropane formal acrylate (CTFA), isobornylmethacrylate (IBMA), benzylmethacrylate (BMA), dicyclopentadienyloxyethylmethacrylate (DCPOEMA), t-butylmethacrylate (tBMA), isobornylacrylate (IBH), dihydrodicyclopentadienylacrylat (DHDCPA).

Examples for free radical initiators are organic peroxides, in particular benzoylperoxide, and examples for catalysts are tertiary amines and/or salts and/or complexes of transition metals. Examples for tertiary amines are N,N-dimethylaniline, N,N-dimethyl-p-toluidine, N,N-diethylaniline, N,N-diethyltoluidine, N,N-bis(2-hydroxyethyl)-p-toluidine, N-ethoxylated p-toluidine, N-alkylmorpholine or mixtures thereof, and examples for the salts and complexes of transition metals are salts and complexes of cobalt, nickel and/or copper.

Preferred adhesive composition of the present invention are compositions wherein the reactive monomer comprises at least 50 % of (meth)acrylic monomer, and whereby at least 50% of said (meth)acrylic monomer is tetrahydrofurfuryl methacrylate or methyl methacrylate or mixture thereof. In a much preferred embodiment, at least 50 % of the reactive monomer(s) is tetrahydrofurfuryl methacrylate or methyl methacrylate or mixture thereof.

It is also preferred that the homo- or copolymers resulting from said reactive monomers A have a glass transition temperature of from about 40°C to about 140°C.

With regard to the liquid elastomer (B), said elastomer is preferably chosen from the group consisting of
- (meth)acrylic functionalized butadiene, isoprene based polymers or block-copolymers, and
- PU-(meth)acrylate obtainable through the syntheses of a polyethylene polyol or polypropylene polyol, a diisocyanate and a hydroxy functionalyzed ethylenically unsaturated monomer, and
- mixtures thereof.

A preferred PU (meth)acrylate is obtainable through a synthesis using polyols with low unsaturation and narrow molar weight distribution as obtainable through double metal cyanide complex catalysis (Acclaim polyols). As well preferred as liquid elastomers are (meth)acrylic terminated butadiene acrylonitrile block copolymers.

The impact modifier (C) is usually a core shell polymer which does not dissolve, but swells in the monomer. suitable core-shell polymers contain a cross-linked acrylic or butadiene based elastomeric core phase polymer which is grafted onto a rigid thermoplastic shell phase polymer.

The compositions of the present invention can comprise further components well known to the skilled person such as preferably also at least one organic or inorganic filler or thixotropic agent. The compositions can also comprise further substances, such as stabilizers, additives, toughening agents, adhesion promotors, defoaming agents, thickeners, plasticizers, wetting agents, wax compounds,cross-linking agents, inhibitors etc. Such additional substances are known to the skilled person. Examples for inhibitors are e.g. hydrochinone, methylhydrochinone, t-butyl-p-cresol and for thixotropic agents e.g. Aerosil.

The compositions of the present invention can be easily manufactured in a short time. To optimize the consistency of the paste it has proved to be advantageous to usually start with only part, usually about half of the amount of reactive monomer A and to add the second part at a later stage.

A usual procedure is as follows: A first part (or if viscosity allows it all) of reactive monomer A, the liquid elastomer B and catalyst and/or initiator D are mixed under heating and stirring until a homogenous mass is obtained (at a temperature of about 60°C for about 30 minutes). Then the whole amount of impact modifier C is added at once, and the mixture is stirred for approx. another 30 minutes. Finally, the second part of reactive monomer A is added and the composition is stirred for another about 30 minutes under vacuum.

Usually either the catalyst or the initiator D are provided in a separate component unless at least one of them is present in a non-reactive form so that it has first to be activated, e.g. by heating.

The invention is now further described by means of examples. Said examples, however, shall not limit the scope of the present invention in any way.

### Examples

### Preparation of compositions

The components used in the examples are identified as:
- MMA: Methyl methacrylate
- THFMA: Tetrahydrofurfuryl methacrylate
- CHMA: Cyclohexyl methacrylate
- CN 965: aliphatic polyurethane-acrylate with a MW 5600 from Cray Valley
- Hycar VTBNX 1300 X33: acrylic functionalized butadiene-acrylo nitrile blockcopolymer from BFGoodrich
- Paraloid EXL 2600: core shell polymer from Rohm and Haas
- p-Toluidine: N,N-bis(2-hydroxyethyl)-p-toluidine
- BPO Paste: a paste of 40 % benzoyl peroxide in phthalate plasticizer

The components used to formulate the adhesive compositions of Examples 1 to 7 and their amounts are listed in Table 1.

### The composition was produced as follows:

Half the amount of reactive monomer A, the liquid elastomer B and catalyst D are added to a vessel equipped with a stirrer, a heating device and a vacuum device. The heating is turned on, and the mixture is stirred for about 30 minutes at 60°C until a homogenous mass was obtained. Then, the heating is turned off, the whole amount of the impact modifier C is added at once, and the mixture is stirred for approx. 30 minutes. Finally, the remaining amount of reactive monomer A is added and the composition stirred for about 30 minutes under vacuum.

### For 1 kg of the composition of e.g. Example 2 the above described procedure was applied as follows:

265 g of tetrayhydrofurfuryl methacrylate are added together with 260 g of Hycar and 10 g of p-toluidine into a 1 kg lab dissolver equipped with an anchor stirrer and a heating and vacuum device. The heating is turned on and the mixture is stirred for about 30 minutes at 60°C until a homogenous mass is obtained. Then the heating is turned off, 200 g of Paraloid EXL 2600 are added at once, and the mixture is stirred for approx. 30 minutes. Finally, another 265 g of tetrahydrofurfuryl methacrylate are added and stirred for about 30 minutes under vacuum.

The adhesives were cured by adding 4 % of the BPO paste.

The test results obtained for the cured adhesives are also listed in Table 1.

### The adhesives were tested as follows:

### Test procedures:

### Tensile strength and Elongation (DIN 53504)

The adhesive was cured to form a sheet of approximately 2.5 mm thickness from which tensile test dumbbells were cut. The stress-strain tests were performed using a rate of 200 mm per minute for measurements at room temperature.

### Impact Test or Charpy Test (DIN 53453)

The impact strength of the adhesive was tested using adhesive bars of 11.8 cm length, 12 cm width and 9.5 cm height. The impact strength was measured at the indicated temperature with a pendulum of 15 kg

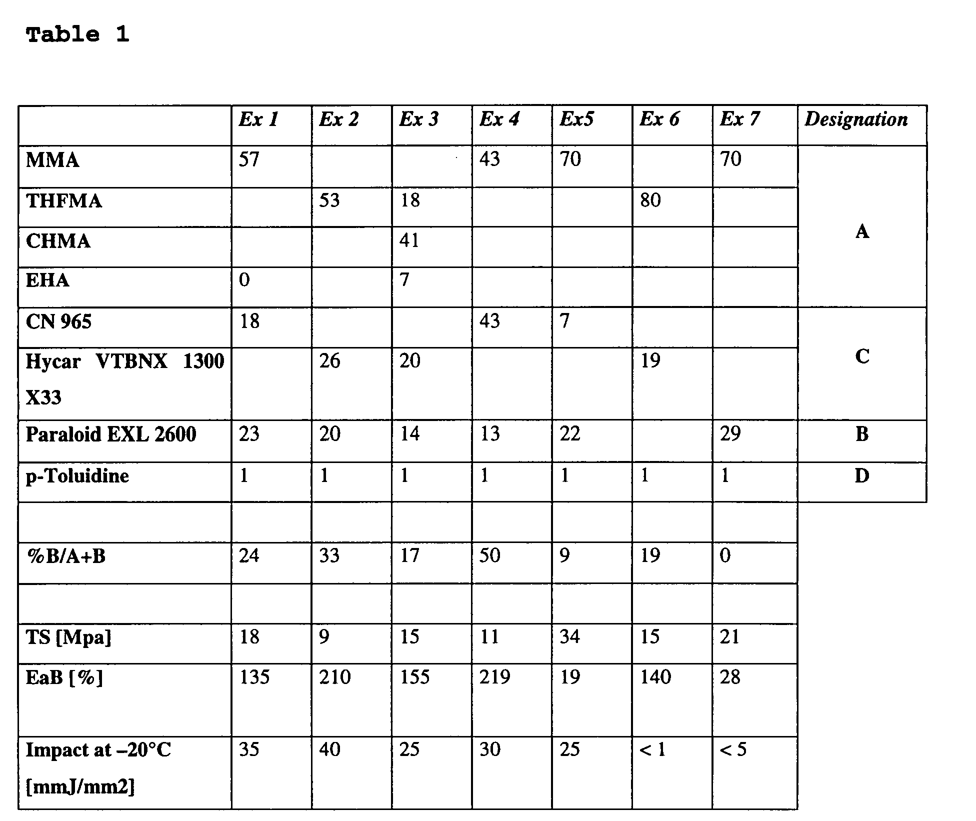

Examples 1 to 4 are compositions which provide adhesives with a high elongation and resistance to low temperatures. Example 5 is made by using a too low amount of liquid elastomer which results in an adhesive with a good low temperature impact resistance, but with a too low elongation. In example 6, a formulation is represented which does not contain any core-shell polymer. Although the elongation is high, the impact resistance of the material at low temperatures is low. Example 7, which is a composition containing only core shell polymer and no liquid elastomer, has not only a low elongation but also a reduced impact resistance. As this formulation does not contain any liquid elastomer (compared with example 5 which contains a low amount of elastomer), the interface between polymer matrix and the impact modifier is not coherent enough to transfer the energy from the matrix onto the impact modifier.

## Claims

1. An adhesive compositions comprising
(i) at least one reactive monomer (A) selected from ethylenically unsaturated carboxylic acid derivatives and mixtures of such derivatives,
(ii) at least one liquid elastomer in a molar weight range of 1000 - 9000 which is functionalized with ethylenically unsaturated groups (B),
(iii) at least one impact modifier (C), and
(iv) at least one free radical initiator and at least one catalyst, whereby optionally either said initiator ,or said catalyst is present separately, in a further component or paste, respectively.

2. The adhesive composition of claim 1 wherein the amount of B based on the total amount of A+B is 15 - 60 % by weight, preferably 15 - 40 % by weight.

3. The adhesive composition of claim 1 or 2 wherein the amount of C based on the total amount of A+B+C is 5 - 30 % by weight, preferably 10 - 25 % by weight.

4. The adhesive composition of anyone of the preceding claims, wherein said at least one ethylenically unsaturated carboxylic acid derivative is an ester or a mixture of esters.

5. The adhesive composition of anyone of the preceding claims, wherein the reactive monomer is a (meth)acrylic monomer.

6. The adhesive composition of anyone of the preceding claims, wherein the reactive monomer comprises at least 50% of tetrahydrofurfuryl methacrylate or methyl methacrylate or mixtures thereof.

7. The adhesive composition of anyone of the preceding claims, wherein the glass transition temperature of the homo- or copolymer resulting from said reactive monomers A is between 40°C and 140°C.

8. The adhesive composition of anyone of the preceding claims, wherein the liquid elastomer (B) is chosen from the group consisting of
- (meth)acrylic functionalized butadiene, isoprene based polymers or block-copolymers, and
- PU-(meth)acrylate obtainable through the syntheses of a polyethylene polyol or polypropylene polyol, a diisocyanate and a hydroxy functionalyzed ethylenically unsaturated monomer, and
- mixtures thereof.

9. The adhesive composition of claim 8, wherein the PU (meth)acrylate is obtainable through a synthesis using polyols with low unsaturation and narrow molar weight distribution as obtainable through double metal cyanide complex catalysis.

10. The adhesive composition of claim 8 or 9, wherein the liquid elastomer is a (meth)acrylic terminated butadiene acrylonitrile blockcopolymer.

11. The adhesive composition of anyone of the preceding claims, wherein the impact modifier (C) is a core shell polymer which does not dissolve but swells in the monomer.

12. The adhesive composition of anyone of the preceding claims wherein the initiators is an organic peroxide, in particular benzoylperoxide, and the catalyst is selected from the group consisting of tertiary amines, and salts of transition metals and complexes of transition metals, in particular the catalyst is selected from the group consisting of N,N-dimethylaniline, N,N-dimethyl-p-toluidine, N,N-diethylaniline, N,N-diethyltoluidine, N,N-bis(2-hydroxyethyl)-p-toluidine, N-ethoxylated p-toluidine, N-alkylmorpholine or mixtures thereof, or from the group consisting of salts and complexes of cobalt, nickel and copper and mixtures thereof.

13. The adhesive composition of anyone of the preceding claims which contains an adhesion improving agent, in particular an adhesion impocing agent selected from the group consisting of (meth)acrylic acids, (meth)acrylic phosphate esters, silanes such as 3-mercaptopropyltrimethoxysilane, (3-methacryloyloxypropyl)trimethoxysilane and 3-glycidyloxypropyltrimethoxysilane or the respective triethoxysilanes, or mixtures of said silanes, and/or Zn di(meth)acrylates.
